# EUROPÄISCHE PATENTSCHRIFT

(11) **EP 1 204 846 B1**
(45) Veröffentlichungstag und Bekanntmachung des Hinweises auf die Patenterteilung: **18.12.2002**
(21) Anmeldenummer: 01958082.8
(22) Anmeldetag: 18.08.2001
(51) Int. Cl.: G01D 11/16

(54) **DREHSTELLER**
ROTATING ACTUATOR
ACTIONNEUR ROTATIF

(30) Priorität: 25.08.2000 DE 10041935
(43) Veröffentlichungstag der Anmeldung: 15.05.2002
(73) Patentinhaber: Leopold Kostal GmbH & Co. KG, 58507 Lüdenscheid (DE)
(72) Erfinder: OSTER, Christoph, 58509 Lüdenscheid (DE); WAGNER, Martin, 58509 Lüdenscheid (DE)
(86) Internationale Anmeldenummer: EP0109547
(87) Internationale Veröffentlichungsnummer: WO02018882

(56) Entgegenhaltungen:
- EP-A- 0 549 870

## Beschreibung

Die Erfindung betrifft einen Drehsteller mit einer drehbar gelagerten Stellwelle und einer damit verbundenen, manuell betätigbaren Handhabe sowie mit einer Einrichtung zum Erzeugen einer Haptik beim Drehen der Handhabe, wobei diese Einrichtung nach Art einer mechanischen Rastung ausgebildet ist und eine Rastkurve und zumindest ein in die Rastkurve eingreifendes Rastelement umfaßt.

Eine solche Vorrichtung ist bekannt aus EP-A-0 549 870.

Drehsteller werden beispielsweise bei Dateneingabegeräten eingesetzt, bei denen durch Drehen des Drehstellers und gegebenenfalls durch Drükken oder Verschwenken desselben etwa eine Cursorsteuerung in unterschiedlichen Menüebenen durchgeführt werden kann. Beispielsweise kann ein solcher Drehsteller Teil eines sogenannten Joysticks sein. Ein solcher Drehsteller ist bekannt aus der DE 197 12 049 A1. Bei diesem vorbekannten Drehsteller ist getrieblich mit der Stellwelle eine Einrichtung zum Erzeugen einer Haptik gekoppelt. Bei dieser Einrichtung handelt es sich um einen Elektromotor, der entsprechend beaufschlagt ein der Drehwegung entgegengesetztes Drehmoment auf die Stellwelle ausübt. In Abhängigkeit von der Ansteuerung bzw. Aktivierung des Elektromotors sowohl hinsichtlich der den Elektromotor beaufschlagenden Stromstärke als auch in Abhängigkeit von der aktuellen Drehwinkelstellung der Stellwelle können unterschiedliche Haptiken bereitgestellt werden. Der Drehsteller kann auch ohne eine Ansteuerung des Elektromotors und somit ohne eine die Drehbewegung prägende Haptik betrieben werden. Es ist daher möglich, daß ein und derselbe Drehsteller sowohl ohne als auch mit einer vorbestimmten Haptik oder auch mit unterschiedlichen Haptiken in Abhängigkeit von dem jeweiligen Modus des Drehstellers betrieben wird. Dies ist vorteilhaft gegenüber solchen Drehstellern, die zum Erzeugen einer Haptik beim Drehen der Handhabe eine Haptikerzeugungseinrichtung nach Art einer mechanischen Rastung mit einer Rastkurve und zumindest einem in die Rastkurve eingreifenden Rastelement aufweisen. Bei diesen mechanischen Haptikerzeugungseinrichtungen ist ein Zu- bzw. Abschalten der Haptik und insbesondere auch ein Umschalten der Haptik nicht möglich.

Im Gegensatz zu den mechanischen nach Art einer Rastung ausgebildeten Haptikerzeugungseinrichtungen wird jedoch bei dem Drehsteller des oben genannten Dokumentes als nachteilig empfunden, daß die Nullage des Drehstellers relativ weich ist und daß infolge des notwendigen Aufbringens eines Gegenmomentes durch den Elektromotor beim Drehen der Handhabe ein Regelvibrieren spürbar ist.

Der Erfindung liegt daher die Aufgabe zugrunde, einen eingangs genannten gattungsgemäßen Drehsteller mit einer Haptikerzeugungseinrichtung arbeitend nach Art einer mechanischen Rastung dergestalt weiterzubilden, daß die zu dem oben aufgezeigten vorbekannten Stand der Technik genannten Nachteile vermieden sind.

Diese Aufgabe wird erfindungsgemäß dadurch gelöst, daß der Haptikerzeugungseinrichtung eine Aktiviereinrichtung zugeordnet ist, die dergestalt auf die Rastkurve oder das zumindest eine Rastelement wirkend ausgelegt ist, daß durch Ansteuern der Aktiviereinrichtung ein Zusammenwirken zwischen dem zumindest einen Rastelement und der Rastkurve zum Erzeugen der durch die Rastkurve geprägten Haptik bei einer Drehbewegung der Stellwelle zu- bzw. abschaltbar ist.

Der erfindungsgemäße Drehsteller geht aus von einem Drehsteller, dessen Haptikerzeugungseinrichtung nach Art einer mechanischen Rastung ausgebildet ist, wodurch eine präzise vorbestimmte Haptik beim Drehen der Stellwelle bereitgestellt ist. Dieser Drehsteller umfaßt ferner eine Aktiviereinrichtung, zweckmäßigerweise elektromagnetisch betätigbar, die auf zumindest eines der beiden zur Erzeugung der Haptik mechanisch zusammenwirkenden Elemente - Rastkurve bzw. Rastelement - wirkt. Mit einer Betätigung bzw. Ansteuerung der Aktiviereinrichtung ist das Zusammenwirken zwischen Rastkurve und dem zumindest einen Rastelement zu- bzw. abschaltbar. Die Aktiviereinrichtung kann ausgelegt sein, um beispielsweise auf das zumindest eine Rastelement einzuwirken und dieses je nach Auslegung der Aktiviereinrichtung bei ihrer Aktivierung in die Rastkurve eingreifen oder von der Rastkurve abgehoben zu lassen. In entsprechender Weise kann die Aktiviereinrichtung auch auf die Rastkurve bzw. den die Rastkurve tragenden Körper wirkend angeordnet sein. Bei dieser Ausgestaltung greift das zumindest eine Rastelement unter Federvorspannung stehend in die Rastkurve ein. Die Rastkurve ist zweckmäßigerweise einem Ringkörper zugeordnet, der konzentrisch die Stellwelle umgibt. Ohne eine Betätigung der Aktiviereinrichtung wird bei einem Drehen der Stellwelle die Rastkurve entsprechend der Drehbewegung infolge des in die Rastkurve eingreifenden Rastelementes mitbewegt, so daß in diesem Modus des Drehstellers keine Haptik spürbar ist. Erst beim Ansteuern der Aktiviereinrichtung wird der die Rastkurve tragende Körper gegenüber einer Drehbewegung der Stellwelle festgelegt, so daß anschließend beim Drehen der Stellwelle das zumindest eine Rastelement über die Rastkurve zum Erzeugen der gewünschten Haptik geführt wird. Eine solche Ausgestaltung hat den Vorteil, daß beim Umschalten von einer Haptik auf eine weitere Haptik unerwünschte Stellwellenbewegungen resultierend aus einem gegebenenfalls nicht in eine Vertiefung exakt eingreifenden Rastelement vermieden sind. Derartige, haptikbedingte Bewegungen der Stellwelle sind in manchen Anwendungen unerwünscht.

Der erfindungsgemäße Drehsteller umfaßt somit eine mechanisch zu- und abschaltbare Haptik.

In einer Weiterbildung der Erfindung ist vorgesehen, daß die Haptikerzeugungseinrichtung eine oder mehrere weitere Rastkurven sowie zumindest ein weiteres, in jede Rastkurve eingreifendes Rastelement umfaßt, wobei weiteren Elementen ebenfalls eine Aktiviereinrichtung zugeordnet ist, um auch diese Haptiken zu- bzw. abschalten zu können. Diese Rastungen können konzentrisch zueinander angeordnet oder in unterschiedlichen Ebenen übereinander liegend vorgesehen sein, so daß ein solcher Drehsteller unterschiedliche Haptiken aufweisen kann. Dabei kann vorgesehen sein, daß jede mechanisch bereitgestellte Haptik einzeln oder auch gruppenweise sich überlagernd zugeschaltet sein kann.

In einem bevorzugten Ausführungsbeispiel ist vorgesehen, daß die Aktiviereinrichtung auf einen die Rastkurve innenseitig tragenden Ringkörper wirkt und bei ihrer Aktivierung reibschlüssig den Ringkörper gegenüber einer Drehbewegung der Stellwelle fixiert. Ebenfalls kann vorgesehen sein, daß ein solcher Ringkörper beispielsweise durch eine Verzahnung formschlüssig durch die Aktiviereinrichtung bei ihrer Ansteuerung gegenüber einer Drehbewegung der Stellwelle festgelegt ist.

Zum Herstellen einer reibschlüssigen Verbindung zwischen einem die Rastkurve tragenden Ringkörper und der Aktiviereinrichtung kann beispielsweise ein elektromagnetisch betätigbarer Spannring ausgebildet nach Art einer Schlauchschelle dienen. Im aktivierten Zustand der Aktiviereinrichtung ist der Ringkörper in dem Spannring fixiert und gegenüber einer Drehbewegung des zumindest einen in die Rastkurve eingreifenden Rastelementes festgelegt.

In einer zweckmäßigen Weiterbildung ist eine weitere Aktiviereinrichtung eingesetzt, die jedoch nicht auf einen die Rastkurve tragenden Ringkörper sondern direkt auf die Stellwelle, zweckmäßigerweise auf einen mit der Stellwelle verbundenen Bremsflansch wirkt. Durch diese Aktiviereinrichtung kann eine Drehbewegung der Stellwelle blockiert oder, wenn erwünscht, das notwendige Drehmoment zum Bewegen der Stellwelle erhöht werden. So läßt sich beispielsweise mit dieser zusätzlichen Aktiviereinrichtung ein haptischer Anschlag verwirklichen. Für den Fall, daß ein solcher Anschlag höheren Kräften standhalten soll, ist es zweckmäßig, diese auf die Stellwelle wirkende Aktiviereinrichtung zum Herstellen einer formschlüssigen Verbindung zwischen den beiden Elementen auszulegen. Ebenfalls besteht die Möglichkeit, einen Drehsteller ohne eine Haptikerzeugungseinrichtung oder mit einer anders gearteten Haptikerzeugungseinrichtung allein mit einer unmittelbar auf die Stellwelle wirkenden Aktiviereinrichtung auszurüsten.

Nachfolgend ist die Erfindung anhand eines Ausführungsbeispieles unter Bezugnahme auf die beigefügten Figuren erläutert. Es zeigen:

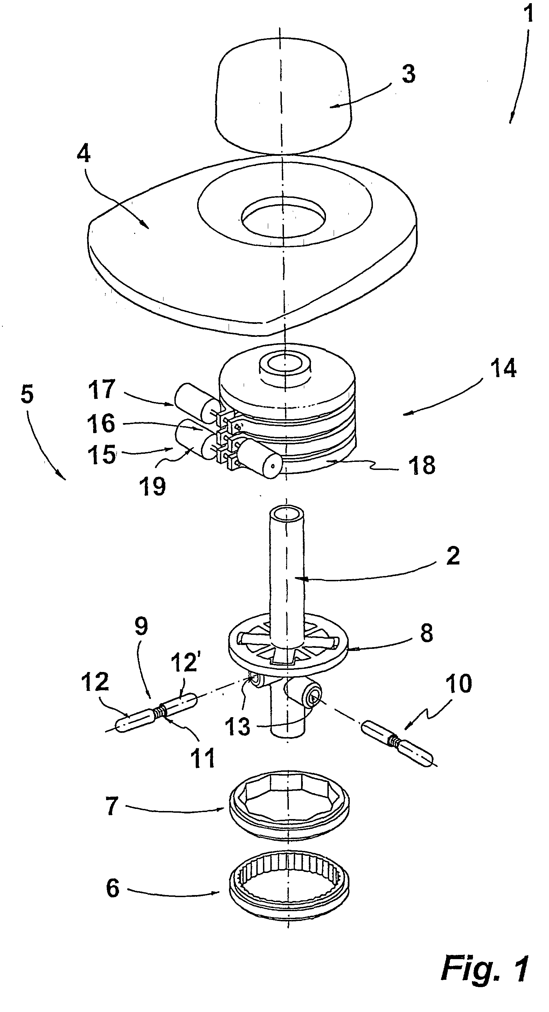

- **Fig. 1:**: Eine dreidimensionale Darstellung eines Drehstellers nach Art einer Explosionsdarstellung,
- **Fig. 2:**: Der Drehdarsteller der Figur 1 in seinem montierten Zustand in einer dreidimensionalen Ansicht mit Blickrichtung auf eine Haptikerzeugungseinrichtung und
- **Fig. 3:**: Einen Längsschnitt durch den Drehsteller der Figur 2 eingesetzt in einen Joystick.

Ein Drehsteller 1 umfaßt eine drehbar gelagerte Stellwelle 2, an deren bedienseitigem Ende als Handhabe ein Drehknopf 3 angebracht ist. Die Stellwelle 2 durchgreift eine Blende 4, so daß die unterhalb des Drehknopfes 3 befindlichen Stellwellenabschnitte durch die Blende 4 bedeckt sind. Der Drehsteller 1 umfaßt ferner eine Haptikerzeugungseinrichtung 5, zu der bei dem in den Figuren dargestellten Ausführungsbeispiel zwei Rastkurvenringe 6, 7, ein mit der Stellwelle 2 verbundener Bremsflansch 8 sowie um 90° versetzt zueinander angeordnete Rasthülsenbaugruppen 9, 10 gehören, die jeweils aus zwei einander gegenüberliegenden und durch eine Druckfeder 11 sich gegenseitig abstützenden Rastbolzen 12, 12' bestehen. Die Rastbolzen 12, 12' sind zusammen mit der Druckfeder 11 in jeweils einer hülsenartigen Aufnahme 13 der Stellwelle 2 angeordnet. Die Rastkurvenringe 6, 7 sind schwimmend zur Drehbewegung der Stellwelle 2 gelagert. Die Haptikerzeugungseinrichtung 5 umfaßt ferner drei in einer Spannglocke 14 zusammengefaßte Aktiviereinrichtungen 15, 16, 17. Die Aktiviereinrichtungen 15, 16, 17 sind aufgebaut nach Art eines Spannringes und elektromagnetisch betätigbar. Eine Aktiviereinrichtung umfaßt somit einen Spannring 18 - an der Aktiviereinrichtung 15 dargestellt - sowie einen Elektromagneten 19 zum Betätigen des Spannringes 18. Bei einer Betätigung des Elektromagneten 19 ist ein Spannen des Spannringes 18 herbeiführbar. Die übrigen Aktiviereinrichtungen 16, 17 sind entsprechend aufgebaut. Die Aktiviereinrichtungen 15, 16 umgeben mit ihren Spannringen 18 den Rastkurvenring 6 bzw. 7. Dabei ist vorgesehen, daß der Innendurchmesser der Spannringe 18 geringfügig größer als der Außendurchmesser der Rastkurvenringe 6, 7 ist. Eine Betätigung des Elektromagneten 19 einer Aktiviereinrichtung 15, 16 führt zu einer Festlegung des jeweiligen Rastkurvenringes 6 bzw. 7, da dieser in dem Spannring 18 reibschlüssig gehalten ist. Die Spannglocke 14 ist mit ihren Aktiviereinrichtungen 15, 16, 17 bezüglich einer Drehbewegung der Stellwelle 2 ortsfest angeordnet.

Die Aktiviereinrichtung 17 wirkt mit dem Bremsflansch 8 in entsprechender Art und Weise zusammen, so daß durch eine Betätigung des Elektromagneten dieser Aktiviereinrichtung 17 eine Erhöhung des notwendigen Drehmomentes zum Ausüben einer Drehbewegung der Stellwelle 2 oder auch zum Verhindern und Blockieren einer Drehbewegung eingesetzt werden kann.

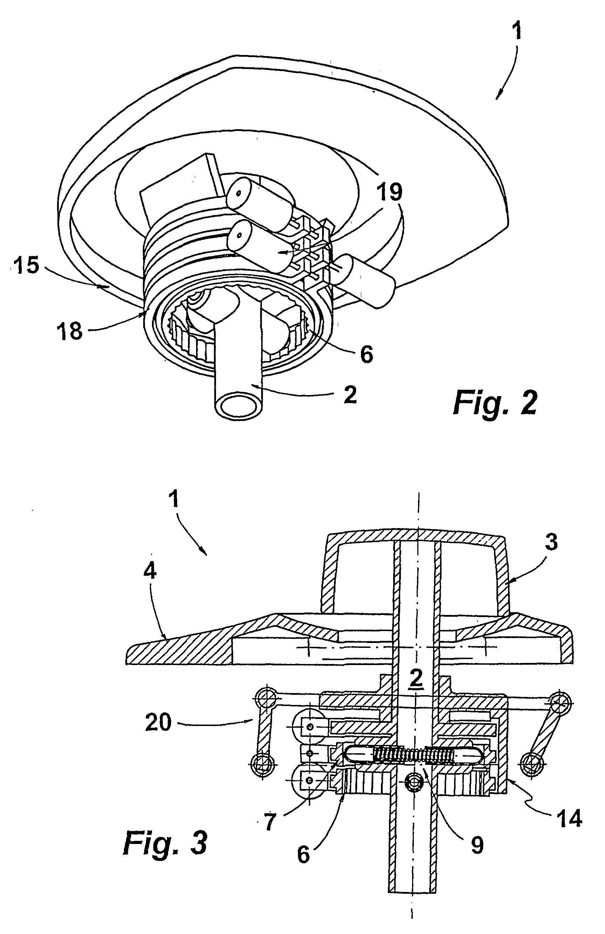

Im montierten Zustand des Drehstellers 1 greifen die beiden Rastbolzen 12, 12' jeweils diametral gegenüberliegend in die Rastkurve jeweils eines Rastkurvenringes 6, 7 ein. Dieses ist aus einer Ansicht von unten in Figur 2 erkennbar. Bei einem Drehen des Drehstellers 1 ohne eine Betätigung des Elektromagneten einer Aktiviereinrichtung 15, 16, 17 ist die Stellwelle 2 ohne eine durch die Rastkurvenringe 6, 7 bereitgestellte Haptik drehbar. Durch das Eingreifen der unter Federvorspannung stehenden Rastbolzen 12, 12' in die Rastkurve eines jeden Rastkurvenringes 6, 7, werden diese bei einer Drehbewegung der Stellwelle 2 mitbewegt. Bei einer Aktivierung eines Elektromagneten einer Aktiviereinrichtung, beispielsweise des Elektromagneten 19 der Aktiviereinrichtung 15 wird der Spannring 18 geschlossen, so daß der von dem Spannring 18 eingeschlossene Rastkurvenring 6 gegenüber einer Drehbewegung der Stellwelle 2 festgelegt ist. Bei einem Drehen der Stellwelle 2 werden nunmehr die beiden Rastbolzen 12, 12' in der Rastkurve des Rastkurvenringes 6 bewegt, so daß eine haptische Drehbewegung entsprechend der in dem Rastkurvenring 6 enthaltenen Rastkurve erfolgt.

Zur Realisierung eines haptischen Anschlages kann die Aktiviereinrichtung 17 dergestalt angesteuert werden, daß durch Spannen des Spannringes dieser Aktiviereinrichtung 17 eine Drehbewegung der Stellwelle 2 verhindert ist.

Die Aktiviereinrichtungen 15, 16, 17 sind einzeln oder auch gruppenweise zum Erzeugen unterschiedlicher Haptiken ansteuerbar.

Figur 3 zeigt den Drehsteller 1 in einem Längsschnitt, wobei bei dieser Ausgestaltung der Drehsteller 1 Teil eines nicht näher dargestellten Joysticks ist. Die Stellwelle 2 und entsprechend auch der Drehknopf 3 sind zusammen mit der die Aktiviereinrichtungen 15, 16, 17 enthaltenen Spannglocke 14 verschwenkbar gelagert; Figur 3 zeigt den Drehsteller 1 in seiner aus der Nullstellung herausgeschwenkten Stellung.

Die mit einfachen Mitteln zu realisierenden haptischen Möglichkeiten bei dem Drehsteller 1 erlauben, daß dieser ohne großen Aufwand Teil eines Joysticks, wie in Figur 3 gezeigt, sein kann, da nur eine einzige Baugruppe - die Spannglocke 14 - mit verschwenkt werden muß. Symbolisiert dargestellt ist in Figur 3 ein Gestänge 20, über welches die Verschwenkbewegung der Stellwelle 2 geführt ist.

### Bezugszeichenliste

- 1: Drehsteller
- 2: Stellwelle
- 3: Drehknopf
- 4: Blende
- 5: Haptikerzeugungseinrichtung
- 6: Rastkurvenring
- 7: Rastkurvenring
- 8: Bremsflansch
- 9: Rasthülsenbaugruppe
- 10: Rasthülsenbaugruppe
- 11: Druckfeder
- 12, 12': Rastbolzen
- 13: Aufnahme
- 14: Spannglocke
- 15: Aktiviereinrichtung
- 16: Aktiviereinrichtung
- 17: Aktiviereinrichtung
- 18: Spannring
- 19: Elektromagnet
- 20: Gestänge

## Patentansprüche

1. Drehsteller mit einer drehbar gelagerten Stellwelle (2) und einer damit verbundenen, manuell betätigbaren Handhabe (3) sowie mit einer Einrichtung (5) zum Erzeugen einer Haptik beim Drehen der Handhabe (3), wobei diese Einrichtung (5) nach Art einer mechanischen Rastung ausgebildet ist und eine Rastkurve und zumindest ein in, die Rastkurve eingreifendes Rastelement (12, 12') umfaßt, **dadurch gekennzeichnet, daß** der Haptikerzeugungseinrichtung (5) eine Aktiviereinrichtung (15, 16) zugeordnet ist, die dergestalt auf die Rastkurve oder das zumindest eine Rastelement (12, 12') wirkend ausgelegt ist, daß durch Ansteuern der Aktiviereinrichtung (15, 16) ein Zusammenwirken zwischen dem zumindest einen Rastelement (12, 12') und der Rastkurve zum Erzeugen der durch die Rastkurve geprägten Haptik bei einer Drehbewegung der Stellwelle (2) zu- bzw. abschaltbar ist.

2. Drehsteller nach Anspruch 1, **dadurch gekennzeichnet, daß** die Aktiviereinrichtung (15, 16) bei ihrer Aktivierung auf einen die Rastkurve tragenden, die Stellwelle (2) konzentrisch umgebenden Ringkörper (6, 7) wirkt, in dessen Rastkurve das zumindest eine unter einer Federvorspannung stehende und mit der Stellwelle (2) verbundene Rastelement (12, 12') eingreift, indem der die Rastkurve tragende Ringkörper (6, 7) durch die Aktiviereinrichtung (15, 16) gegenüber einer Drehbewegung der Stellwelle (2) festgelegt ist.

3. Drehsteller nach Anspruch 2, **dadurch gekennzeichnet, daß** zwischen der Aktiviereinrichtung (15, 16) und dem die Rastkurve tragenden Ringkörper (6, 7) eine reibschlüssige Verbindung bei einer Aktivierung der Aktiviereinrichtung (15, 16) hergestellt ist.

4. Drehsteller nach Anspruch 2, **dadurch gekennzeichnet, daß** zwischen der Aktiviereinrichtung und dem die Rastkurve tragenden Ringkörper eine formschlüssige Verbindung bei einer Aktivierung der Aktiviereinrichtung hergestellt ist.

5. Drehsteller nach Anspruch 3, **dadurch gekennzeichnet, daß** als Aktiviereinrichtung (15, 16) ein den die Rastkurve tragenden Ringkörper (6, 7) konzentrisch umgebender elektromagnetisch betätigbarer Spannring (18) eingesetzt ist, in dem bei aktivierter Aktiviereinrichtung (15, 16) der Ringkörper (6, 7) drehfest gehalten ist.

6. Drehsteller nach einem der Ansprüche 1 - 5, **dadurch gekennzeichnet, daß** die Haptikerzeugungseinrichtung zumindest eine weitere Rastkurve sowie zumindest ein weiteres, in die Rastkurve eingreifendes Rastelement umfaßt, auf welche Elemente - Rastkurve bzw. Rastelement - zu ihrem Zusammenwirken zum Erzeugen einer Haptik eine weitere Aktiviereinrichtung wirkt.

7. Drehsteller nach Anspruch 6 in seinem Rückbezug auf Anspruch 2, **dadurch gekennzeichnet, daß** die die Rastkurven tragenden Ringkörper (6, 7) benachbart in unterschiedlichen Ebenen bezüglich der Längserstreckung der Stellwelle (2) angeordnet sind.

8. Drehsteller nach einem der Ansprüche 1 - 7, **dadurch gekennzeichnet, daß** eine auf die Stellwelle (2) einwirkende und eine Drehbewegung beeinflussende Akltiviereinrichtung (17) vorgesehen ist.

9. Drehsteller nach Anspruch 8, **dadurch gekennzeichnet, daß** als auf die Stellwelle (2) einwirkende Aktiviereinrichtung (17) ein elektromagnetisch betätigbarer Spannring eingesetzt ist, der konzentrisch einen mit der Stellwelle (2) verbundenen Bremsflansch (8) umgibt.

10. Drehsteller nach einem der Ansprüche 6 - 9, **dadurch gekennzeichnet, daß** die eingesetzten Aktiviereinrichtungen (15, 16, 17) in einer Baugruppe (14) zusammengefaßt sind.

## Revendications

1. Actuateur comprenant un levier de commande (2) et une manette (3), qui est reliée à celui-ci et peut être actionnée manuellement, ainsi qu'un dispositif (5), qui génère une haptique lorsque l'on tourne ladite manette (3), ce dispositif générateur d'haptique (5) étant conçu à la manière d'un système d'enclenchement mécanique et comprenant, au moins, un élément d'encliquetage (12, 12') qui s'engage dans une courbe d'enclenchement, **caractérisé en ce qu**'un dispositif d'activation (15, 16) est coordonné au dispositif générateur d'haptique (5) pour générer l'haptique soumise à l'influence de la courbe d'enclenchement lors d'une rotation de l'arbre de commande, ledit dispositif d'activation (15, 16) étant conçu de sorte à initier, lors de son actionnement, une action conjointe de la courbe d'enclenchement et d'au moins un élément d'encliquetage (12, 12'), et à l'inhiber lors de son réactionnement.

2. Actuateur selon la revendication 1, **caractérisé en ce que,** lors de son actionnement, le dispositif d'activation (15, 16) agit sur un corps annulaire (6, 7), qui entoure concentriquement l'arbre de commande (2) et porte la courbe d'enclenchement, dans laquelle s'engage, au moins, un élément d'encliquetage (12, 12') qui est soumis à la précontrainte d'un ressort et relié à l'arbre de commande (2), ledit corps annulaire (6, 7), étant fixé par rapport à un mouvement de rotation du levier de commande (2), par le dispositif d'activation (15, 16).

3. Actuateur selon la revendication 2, **caractérisé en ce que,** lors de l'actionnement du dispositif d'activation (15, 16), une liaison par friction s'effectue entre le dispositif d'activation (15, 16) et le corps annulaire (6, 7) qui porte la courbe d'enclenchement.

4. Actuateur selon la revendication 2, **caractérisé en ce que,** lors de l'actionnement du dispositif d'activation (15, 16), une liaison géométrique est effectuée entre le dispositif d'activation et le corps annulaire qui porte la courbe d'enclenchement.

5. Actuateur selon la revendication 3, **caractérisé en ce que** le dispositif d'activation (15, 16) mis en oeuvre est un anneau tendeur (18) à commande électromagnétique qui entoure concentriquement le corps annulaire (6, 7) pourvu de la courbe d'enclenchement et maintenu solidairement en rotation dans ledit anneau tendeur (18), lorsque le dispositif d'activation (15, 16) est activé.

6. Actuateur selon l'une des revendications 1 à 5, **caractérisé en ce que** le dispositif générateur d'haptique comprend, au moins, une autre courbe d'enclenchement ainsi qu'au moins un autre élément d'encliquetage qui s'engage dans ladite courbe d'enclenchement, un autre dispositif d'activation agissant sur lesdits éléments - courbe d'enclenchement resp. élément d'encliquetage - pour assurer leur action conjointe dans le but de générer l'haptique.

7. Actuateur selon la revendication 6, en relation avec la revendication 2, **caractérisé en ce que** les corps annulaires (6, 7), qui portent les courbes d'enclenchement, sont disposés, à proximité l'un de l'autre, à différents niveau, dans le sens longitudinal de l'arbre de commande (2).

8. Actuateur selon l'une des revendications 1 à 7, **caractérisé en ce qu'**un dispositif d'activa-tion (17) est prévu, lequel agit sur l'arbre de commande (2) et influence un mouvement de rotation.

9. Actuateur selon la revendication 8,, **caractérisé en ce que** le dispositif d'activation (17), agissant sur l'arbre de commande (2), est un anneau tendeur à commande électromagnétique qui entoure concentriquement une bride de freinage (8) qui est reliée à l'arbre de commande (2).

10. Actuateur selon l'une des revendications 6 à 9, **caractérisé en ce que** les unités d'activation mises en oeuvre (15, 16, 17) sont réunies pour former un sous-groupe (14).

## Claims

1. Rotating actuator with a pivoted setting stem (2) and a manually operable handle (3) connected to the same and with a facility (5) for generating a haptic response when the handle (3) is rotated, with this facility (5) designed in the fashion of a mechanical indexing system and comprising an indexing curve and at least one notching element (12,12') which engages in the indexing curve, **characterized by the fact** that the facility for generating the haptic response (5) is allocated to an activating device (15, 16) which is designed to act on the indexing curve or the at least one notching element (12, 12') in such a way that by triggering the activating device (15, 16) a cooperation between the at least one notching element (12, 12') and the indexing curve to generate the haptic response **characterized by** the indexing curve can be started or stopped by rotating the setting stem (2).

2. Rotating actuator in accordance with Claim 1, **characterized by the fact** that upon activation the activating device (15, 16) acts on a ring body (6, 7) which concentrically encircles the setting stem (2) and supports the indexing curve, in which the at least one notching element 12, 12'), which is spring-prestressed and connected to the setting stem (2), engages as a result of the ring body (6, 7) supporting the indexing curve being fixed by the activating device (15, 16) relating to a turning motion of the setting stem (2).

3. Rotating actuator in accordance with Claim 2, **characterized by the fact** that a frictionally engaging connection is established between the activating device (15, 16) and the ring body (6, 7) supporting the indexing curve.

4. Rotating actuator in accordance with Claim 2, **characterized by the fact** that an interlocking connection is established between the activating device and the ring body supporting the indexing curve when the activating device is activated.

5. Rotating actuator in accordance with Claim 3, **characterized by the fact** that an electromagnetically operable clamping ring (18) is used as an activating device (15, 16) which concentrically encircles the ring body (6, 7) supporting the indexing curve, in which clamping ring (18) the ring body (6, 7) is held in a stationary manner when the activating device (15, 16) is activated.

6. Rotating actuator in accordance with any of Claims 1 to 5, **characterized by the fact** that the facility for generating the haptic response comprises at least one further indexing curve and at least one further notching element which engages in the indexing curve with a further activating device acting on such elements - indexing curve or notching element - to facilitate their cooperation for the purpose of generating a haptic response.

7. Rotating actuator in accordance with Claim 6 in its relation back to Claim 2, **characterized by the fact** that the ring bodies (6, 7) supporting the indexing curves are arranged adjacently at different levels relating to the longitudinal extent of the setting stem (2).

8. Rotating actuator in accordance with any of Claims 1 to 7, **characterized by the fact** that an activating device (17) is provided which acts on the setting stem (2) and influences a rotary motion.

9. Rotating actuator in accordance with Claim 8, **characterized by the fact** that an electromagnetically operable clamping ring is used as an activating device (17) which concentrically encircles a brake flange (8) connected to the setting stem (2) and acts on the setting stem (2).

10. Rotating actuator in accordance with any of Claims 6 to 9, **characterized by the fact** that the employed activating devices (15, 16, 17) are combined in a sub-assembly (14).
